# EUROPÄISCHE PATENTSCHRIFT

(11) **EP 3 526 094 B1**
(45) Veröffentlichungstag und Bekanntmachung des Hinweises auf die Patenterteilung: **22.07.2020**
(21) Anmeldenummer: 17784611.0
(22) Anmeldetag: 09.10.2017
(51) Int. Cl.: B60W 30/18, B60K 6/36, B60K 6/48, B60K 6/547, B60W 10/06, B60W 10/08, B60W 10/113, B60W 20/00, B60W 10/26, B60W 30/186

(54) **VERFAHREN ZUM DURCHFÜHREN EINES KRIECHLADEBETRIEBES UND HYBRID-ANTRIEBSSTRANG HIERFÜR**
METHOD FOR IMPLEMENTING A CREEP CHARGING MODE AND HYBRID DRIVE TRAIN THEREFOR
PROCÉDÉ PERMETTANT D'EFFECTUER UN MODE DE CHARGE EXTRA-LENT ET CHAÎNE CINÉMATIQUE HYBRIDE ASSOCIÉE

(30) Priorität: 13.10.2016 DE 102016119558
(43) Veröffentlichungstag der Anmeldung: 21.08.2019
(73) Patentinhaber: Magna PT B.V. & Co. KG, 74199 Untergruppenbach (DE)
(72) Erfinder: PROST, Jacques, 74074 Heilbronn (DE)
(74) Vertreter: Rausch, Gabriele
(86) Internationale Anmeldenummer: PCT/EP2017/075612
(87) Internationale Veröffentlichungsnummer: WO 2018/069213

(56) Entgegenhaltungen:
- EP-A2- 2 757 005
- DE-A1-102007 022 774
- DE-A1-102007 055 784
- DE-A1-102007 055 787

## Beschreibung

Die vorliegende Erfindung betrifft ein Verfahren zum Durchführen eines Kriechladebetriebes mittels eines Hybrid-Antriebsstranges eines Kraftfahrzeuges, wobei der Hybrid-Antriebsstrang einen Verbrennungsmotor und ein Doppelkupplungsgetriebe aufweist, das eine erste Reibkupplung, ein erstes Teilgetriebe, eine zweite Reibkupplung und ein zweites Teilgetriebe beinhaltet, wobei eine elektrische Maschine mit einem Eingang des zweiten Teilgetriebes verbunden ist, wobei die elektrische Maschine mit einem elektrischen Energiespeicher verbunden ist und dazu ausgebildet ist, in einem Generatorbetrieb den elektrischen Energiespeicher zu laden, wobei der Kriechladebetrieb beinhaltet, den Energiespeicher während einer Kriechfahrt, bei der die erste Reibkupplung im Schlupfbetrieb Antriebsleistung von dem Verbrennungsmotor in das erste Teilgetriebe überträgt, zu laden.

Ferner betrifft die vorliegende Erfindung einen Hybrid-Antriebsstrang der oben beschriebenen Art, wobei eine Steuereinrichtung dazu ausgebildet und eingerichtet ist, ein Verfahren der oben genannten Art durchzuführen.

Hybrid-Antriebsstränge, in denen ein Doppelkupplungsgetriebe integriert ist, wobei eine elektrische Maschine an dem Eingang von einem Teilgetriebe angeschlossen ist, ermöglichen eine Vielzahl von Hybridfunktionen. Beispielsweise ist über das Teilgetriebe, an dessen Eingang die elektrische Maschine angeschlossen ist, ein rein elektrischer Fahrbetrieb möglich. Ein rein verbrennungsmotorischer Betrieb ist unter Verwendung von beiden Teilgetrieben möglich, wobei Gangwechsel zugunterbrechungsfrei durchgeführt werden können. Ein Überlagerungsbetrieb bzw. Boost-Betrieb ist gleichfalls möglich.

Ferner ist es möglich, einen elektrischen Energiespeicher zu laden, wenn die elektrische Maschine im Generatorbetrieb ist, also beispielsweise rekuperierend beim Bremsen oder auch im Wege einer Lastpunktanhebung des Verbrennungsmotors. Hierbei wird der Verbrennungsmotor so angesteuert, dass er zuzüglich zu einer Fahrleistungsanforderung zusätzliche Leistung bereitstellt, die dann zum Antreiben der elektrischen Maschine und folglich zum Laden des Energiespeichers verwendbar ist.

Ein solcher Ladebetrieb ist dabei zum einen so realisierbar, dass das der elektrischen Maschine zugeordnete Teilgetriebe vom Abtrieb abgekoppelt wird und die der elektrischen Maschine zugeordnete Reibkupplung geschlossen wird, sodass Antriebsleistung zum Vortrieb des Kraftfahrzeuges über beispielsweise die erste Reibkupplung übertragen wird, und Leistung zum Antreiben der elektrischen Maschine zum Zwecke des Ladens des Energiespeichers über die zweite Reibkupplung.

Generell ist es auch denkbar, die gesamte kombinierte Leistung über die erste Kupplung zu übertragen, wobei in diesem Fall das der elektrischen Maschine zugeordnete Teilgetriebe mit dem Abtrieb gekoppelt wird und die der elektrischen Maschine zugeordnete zweite Reibkupplung geöffnet wird. Im letzteren Fall muss die erste Kupplung sowohl Leistung zum Vortrieb des Kraftfahrzeuges als auch Leistung zum Laden des Energiespeichers übertragen.

Generell erfolgt die Leistungsübertragung bei vollständig geschlossener Kupplung, sodass eine in dieser Kupplung entstehende Reibleistung gegen Null geht.

Mit einem solchen Antriebsstrang ist jedoch auch eine sogenannte Kriechfahrt möglich. Hierbei ist die Geschwindigkeit des Kraftfahrzeuges kleiner als jene Geschwindigkeit, bei der der Verbrennungsmotor mit einer Minimaldrehzahl (beispielsweise Leerlaufdrehzahl) dreht und in dem Doppelkupplungsgetriebe die niedrigste Vorwärtsgangstufe (in der Regel Vorwärtsgangstufe 1) geschaltet ist. Wenn das Fahrzeug mit einer solchen Kriechgeschwindigkeit unterhalb der Minimalgeschwindigkeit bewegt werden soll, so muss die der niedrigsten Gangstufe zugeordnete Reibkupplung unter Schlupf betrieben werden. In diesem Fall entsteht in der diese Leistung übertragenden Kupplung eine Reibleistung, die eine Funktion ist eines Fahr- bzw. Anfahrmomentes, und ggf. auch eines Lademomentes. Ein vergleichbarer Zustand tritt dann auf, wenn ein Fahrzeug beispielsweise an einer Steigung gehalten werden soll, ohne dass die Bremse betätigt wird (sogenannte Hill-Hold-Funktion).

Auch hierbei ist es bevorzugt, wenn der Verbrennungsmotor Antriebsleistung bereitstellt, die zum einen über die der Anfahrgangstufe zugeordnete Reibkupplung übertragen wird. In dieser Reibkupplung entsteht dann eine Reibleistung, die dem Anfahrmoment entspricht. Zum anderen wird, wenn in diesem Zustand auch noch der elektrische Energiespeicher geladen werden soll, über die andere Kupplung, die der elektrischen Maschine zugeordnet ist, eine Leistung des Verbrennungsmotors übertragen, wobei die Kupplung, die der elektrischen Maschine zugeordnet ist, in diesem Fall ebenfalls eine Reibleistung entsprechend einem Lademoment erzeugt oder aber vollständig geschlossen wird, in welchem Fall in dieser Kupplung im Wesentlichen keine Reibleistung erzeugt wird.

Da die oben genannten Fahrzustände "Kriechfahrt" und "Hill-Hold" generell über längere Zeit andauern können, kann es hierbei zu einer großen thermischen Belastung zumindest jener Kupplung kommen, über die das Anfahrmoment übertragen wird.

DE102007055787A1 zeigt Verfahren und eine Vorrichtung zur Steuerung eines Kriechbetriebes eines Fahrzeugs mit einem Hybridantrieb, mit einem Parallelhybrid-Antriebsstrang, umfassend einen Verbrennungsmotor, wenigstens eine Elektromaschine, ein zwischen dem Verbrennungsmotor und der Elektromaschine angeordnetes, als ein Reibelement ausgebildetes erstes Schaltelement, mittels dessen der Verbrennungsmotor mit der Elektromaschine verbindbar ist, eine Getriebe, einen Abtrieb und wenigstens ein zwischen der Elektromaschine und dem Abtrieb angeordnetes, als ein Reibelement ausgebildetes zweites Schaltelement, mittels dessen die Elektromaschine mit dem Abtrieb wirkverbindbar ist. Um ein kostengünstiges, effektives und bauteilschonendes Dauerkriechen zu ermöglichen und dabei eine zuverlässige Verfügbarkeit von elektrischer Energie für elektrische Verbraucher des Fahrzeuges zu gewährleisten, wird der Kriechbetrieb abwechselnd durch einen mittels eines Betriebes wenigstens eines Schaltelementes im Schlupf erzeugten verbrennungsmotorischen Kriechmodus und durch einen mittels der Elektromaschine zumindest unterstützten elektromotorischen Kriechmodus realisiert.

Es ist vor diesem Hintergrund eine Aufgabe der Erfindung, ein verbessertes Verfahren zum Durchführen eines Kriechladebetriebes anzugeben.

Die obige Aufgabe wird gelöst durch ein Verfahren gemäß Anspruch 1, zum Durchführen eines Kriechladebetriebes mittels eines Hybrid-Antriebsstranges einen Kraftfahrzeuges, wobei der Hybrid-Antriebsstrang einen Verbrennungsmotor und ein Doppelkupplungsgetriebe aufweist, das eine erste Reibkupplung, ein erstes Teilgetriebe, eine zweite Reibkupplung und ein zweites Teilgetriebe beinhaltet, wobei eine elektrische Maschine mit einem Eingang des zweites Teilgetriebes verbunden ist, wobei die elektrische Maschine mit einem elektrischen Energiespeicher verbunden ist und dazu ausgebildet ist, in einem Generatorbetrieb den elektrischen Energiespeicher zu laden, wobei der Kriechladebetrieb beinhaltet, den Energiespeicher während einer Kriechfahrt, bei der die erste Reibkupplung im Schlupfbetrieb Antriebsleistung von dem Verbrennungsmotor in das erste Teilgetriebe überträgt, zu laden, und wobei der Kriechladebetrieb als alternierender Betrieb eingerichtet ist, mit wenigstens einer Ladephase, in der der Energiespeicher geladen wird, und mit wenigstens einer Zwischenphase, in der der Energiespeicher nicht geladen wird, dadurch gekennzeichnet, dass die Zwischenphase dadurch eingerichtet wird, dass die zweite Reibkupplung geöffnet wird, wobei in der Zwischenphase die elektrische Maschine als Motor betrieben wird und Antriebsleistung für die Kriechfahrt bereitstellt, sodass eine über die erste Reibkupplung übertragene Antriebsleistung des Verbrennungsmotors reduziert werden kann und in der Ladephase die zweite Reibkupplung geschlossen ist, so dass Antriebsleistung von dem Verbrennungsmotor über die zweite Reibkupplung der elektrischen Maschine zugeführt wird, die als Generator betrieben wird und elektrische Energie zum Laden des Energiespeichers bereitstellt.

Ferner wird die obige Aufgabe gelöst durch einen Hybrid-Antriebsstrang gemäß Anspruch 7.

Durch das Einrichten des Kriechladebetriebes als alternierender Betrieb kann die thermische Belastung der die Antriebsleistung von dem Verbrennungsmotor übertragenden ersten Reibkupplung verringert werden.

Generell ist es dabei denkbar, dass in der Zwischenphase beispielsweise einfach die zweite Reibkupplung geöffnet wird und/oder die elektrische Maschine in einen Leerlaufzustand versetzt wird, um auf diese Weise den Ladevorgang zu unterbrechen. In diesem Fall ist es bevorzugt, wenn die von dem Verbrennungsmotor bereitgestellte Leistung in entsprechender Weise angepasst (insbesondere reduziert) wird, um die Kriechfahrt mit konstanter Geschwindigkeit durchzuführen.

In der Ladephase ist es bei dieser Ausführungsform möglich, die Ladeleistung hingegen beispielsweise zu erhöhen gegenüber einer geforderten mittleren Ladeleistung.

Mit anderen Worten, wenn eine bestimmte Ladeleistung gefordert ist, ist es bei dem alternierenden Ladebetrieb während der Kriechfahrt möglich, in der Ladephase mit einer höheren Leistung zu laden und in der Zwischenphase nicht zu laden, sodass im zeitlichen Mittel über die Ladephase und die Zwischenphase die geforderte Ladeleistung erreicht wird.

Erfindungsgemäß wird jedoch vorgesehen, dass in der Zwischenphase die elektrische Maschine als Motor betrieben wird und Antriebsleistung für die Kriechfahrt bereitstellt, sodass eine über die erste Reibkupplung übertragene Antriebsleistung des Verbrennungsmotors noch weiter reduziert werden kann.

Mit anderen Worten wird hierbei in der Zwischenphase ein Boost-Betrieb eingerichtet, bei dem für die Kriechfahrt sowohl verbrennungsmotorische Antriebsleistung über die erste Reibkupplung übertragen wird, als auch elektromotorische Antriebsleistung übertragen wird, vorzugsweise über das zweite Teilgetriebe.

Dies ermöglicht es, in der Zwischenphase die thermische Belastung der ersten Reibkupplung noch einmal deutlich zu reduzieren, wobei in der Ladephase wiederum mit einer höheren Ladeleistung als die geforderte Ladeleistung geladen wird, um letztlich im zeitlichen Mittel über die Ladephase und die Zwischenphase die geforderte Ladeleistung bereitstellen zu können.

Erfindungsgemäß ist in der Ladephase die zweite Reibkupplung geschlossen, sodass Antriebsleistung von dem Verbrennungsmotor über die zweite Reibkupplung der elektrischen Maschine zugeführt wird, die als Generator betrieben wird und elektrische Energie zum Laden des Energiespeichers bereitstellt.

Die zweite Reibkupplung kann dabei vorzugsweise vollständig geschlossen werden, sodass hierbei in der zweiten Reibkupplung im Wesentlichen keine relevante Reibleistung entsteht und insofern kein thermisch kritischer Zustand für die zweite Reibkupplung auftreten kann.

Gemäß einer weiteren insgesamt bevorzugten Ausführungsform ist das zweite Teilgetriebe in der Ladephase von einem Abtrieb des Antriebsstranges entkoppelt.

Mit anderen Worten sind in dem zweiten Teilgetriebe sämtliche Schaltkupplungen vorzugsweise geöffnet. Hierdurch kann das Laden der elektrischen Maschine unbeeinflusst von der Situation am Abtrieb erfolgen.

Ferner ist es insgesamt vorteilhaft, wenn das zweite Teilgetriebe in der Zwischenphase mit einem Abtrieb des Antriebsstranges gekoppelt ist.

Über die Kopplung des zweiten Teilgetriebes mit dem Abtrieb kann beispielsweise der Boost-Betrieb eingerichtet werden, ohne dass in der Zwischenphase die zweite Reibkupplung geschlossen wird. Mit anderen Worten ist in der Zwischenphase die zweite Reibkupplung vorzugsweise geöffnet.

Generell ist es möglich, dass das erste Teilgetriebe ungeraden Vorwärtsgangstufen des Doppelkupplungsgetriebes zugeordnet ist und das zweite Teilgetriebe geraden Vorwärtsgangstufen. Es ist jedoch gleichfalls möglich, dass das erste Teilgetriebe geraden Vorwärtsgangstufen des Doppelkupplungsgetriebes zugeordnet ist und das zweite Teilgetriebe ungeraden Vorwärtsgangstufen.

Ferner ist es insgesamt vorteilhaft, wenn das erste Teilgetriebe ungeraden Vorwärtsgangstufen des Doppelkupplungsgetriebes zugeordnet ist und wenn während des Kriechladebetriebs in dem ersten Teilgetriebe die Vorwärtsgangstufe 1 eingelegt ist, also die zum Anfahren gewöhnlich verwendete Anfahrgangstufe.

Hierdurch kann die Kriechfahrt mit einer möglichst geringen Differenzdrehzahl zwischen Eingangsglied und Ausgangsglied der ersten Reibkupplung durchgeführt werden. Gemäß einer weiteren bevorzugten Ausführungsform ist dabei das zweite Teilgetriebe den geraden Vorwärtsgangstufen zugeordnet, wobei in dem zweiten Teilgetriebe während der Zwischenphase die Vorwärtsgangstufe 2 eingelegt ist.

Hierbei kann der Boost-Betrieb über die Vorwärtsgangstufe 2 eingerichtet werden. Dies ermöglicht das Bereitstellen eines hohen Momentes am Abtrieb zum Zwecke der Kriechfahrt und zum Zwecke der Entlastung der ersten Reibkupplung. Zum anderen kann in einem ggf. folgenden Betrieb die zweite Gangstufe eingelegt bleiben, um beispielsweise einen herkömmlichen verbrennungsmotorischen Fahrmodus einzurichten.

Ferner ist es vorteilhaft, wenn der Energiespeicher in der Ladephase mit einer Ladeleistung geladen wird, wobei der Energiespeicher in der Zwischenphase mit einer Boost-Leistung entladen wird, wobei der Betrag der Ladeleistung größer ist als der Betrag der Boost-Leistung.

Das Verhältnis von Ladeleistung zu Boost-Leistung liegt vorzugsweise in einem Bereich von 1,5:1 bis 6:1, insbesondere in einem Bereich von 2:1 bis 4:1.

Generell ist es bei einem Antriebsstrang der oben beschriebenen Art möglich, eine gewünschte Ladeleistung für den Energiespeicher über die der elektrischen Maschine zugeordnete zweite Reibkupplung zu übertragen (bei Lastpunktanhebung des Verbrennungsmotors). Wenn die zur Übertragung der Antriebsleistung auf das erste Teilgetriebe verwendete erste Reibkupplung eine Differenzdrehzahl hat, also beispielsweise beim Anfahren oder beim Kriechen, muss das Moment höher sein und verursacht eine höhere thermische Belastung dieser Kupplung. Durch den alternierenden Betrieb kann erreicht werden, dass eine geforderte Ladeleistung bei geringerer thermischer Belastung der Kupplung erreicht wird, indem in der Ladephase mit einer deutlich höheren Ladeleistung geladen wird, sodass im Mittel die geforderte Ladeleistung erreicht wird.

Insgesamt ergibt sich so eine längere Kriechzeit bzw. eine höhere mittlere Ladeleistung wird ermöglicht. Eine thermische Grenze der Reibkupplung wird später erreicht. Das Verhältnis der zeitlichen Dauer der Ladephase zu der zeitlichen Dauer der Zwischenphase liegt vorzugsweise in einem Bereich von 0,25:1 bis 4:1, insbesondere 0,5:1 bis 2:1, bevorzugt 1:1

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: einen erfindungsgemäßen Hybrid-Antriebsstrang während einer Ladephase;
- Figur 2: den Hybrid-Antriebsstrang der Figur 1 während einer Zwischenphase; und
- Figur 3: ein Zeitablaufdiagramm von elektrischer Maschinenleistung über der Zeit und von weiteren Größen bei Einrichtung eines alternierenden Kriechladebetriebs.

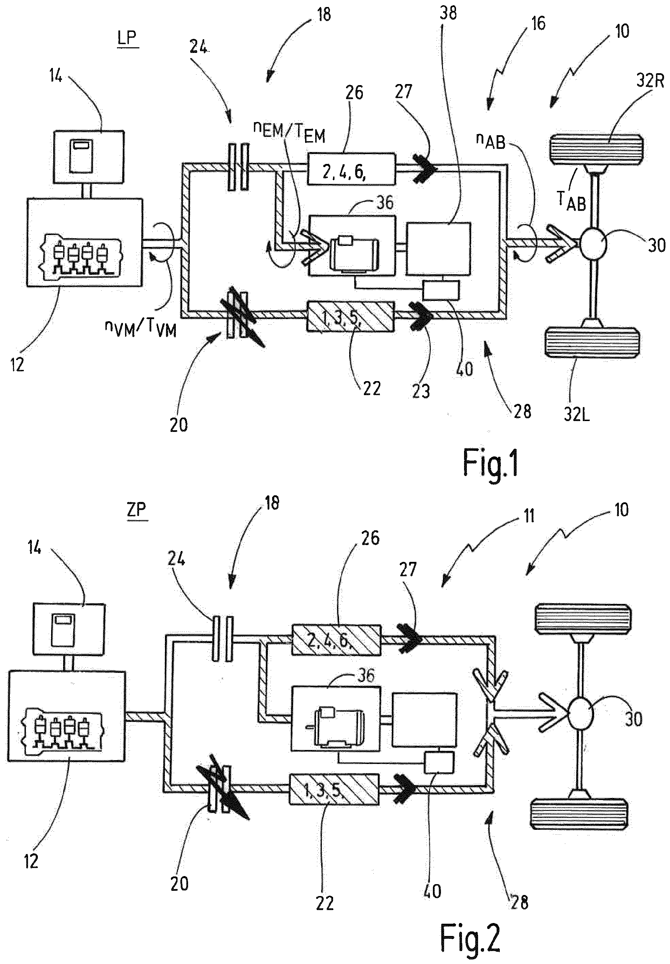

In Fig. 1 ist ein Antriebsstrang für ein Kraftfahrzeug schematisch dargestellt und generell mit 10 bezeichnet. Der Antriebsstrang 10 beinhaltet einen Verbrennungsmotor 12, der Brennstoff aus einem Brennstofftank 14 erhält. Ferner beinhaltet der Antriebsstrang 10 ein Doppelkupplungsgetriebe 16. Das Doppelkupplungsgetriebe 16 beinhaltet eine Doppelkupplungsanordnung 18, die eine erste Reibkupplung 20 aufweist. Ein Eingangsglied der ersten Reibkupplung 20 ist mit dem Verbrennungsmotor 12 verbunden. Ein Ausgangsglied der ersten Reibkupplung 20 ist mit einem ersten Teilgetriebe 22 für die ungeraden Vorwärtsgangstufen verbunden. Bei 23 sind Schaltkupplungen des ersten Teilgetriebes 22 schematisch angedeutet, mittels denen die Gangstufen des ersten Teilgetriebes geschaltet werden können.

Die Doppelkupplungsanordnung 18 beinhaltet ferner eine zweite Reibkupplung 24, deren Eingangsglied ebenfalls mit dem Verbrennungsmotor 12 verbunden ist. Ein Ausgangsglied der zweiten Reibkupplung 24 ist mit einem zweiten Teilgetriebe 26 verbunden, das den geraden Vorwärtsgangstufen zugeordnet ist. Bei 27 sind schematisch Schaltkupplungen des zweiten Teilgetriebes 26 angedeutet.

Die Schaltkupplungen 23 des ersten Teilgetriebes und die Schaltkupplungen 27 des zweiten Teilgetriebes dienen jeweils dazu, das erste bzw. das zweite Teilgetriebe 22, 26 mit einem Abtrieb 28 zu koppeln oder hiervon zu entkoppeln.

Der Abtrieb 28 ist mit einem Differential 30 des Antriebsstranges 10 verbunden, wobei das Differential 30 dazu dient, Antriebsleistung auf angetriebene Räder 32L, 32R zu verteilen.

Der Antriebsstrang 10 beinhaltet ferner eine elektrische Maschine 34, die mit einem Eingang 36 des zweiten Teilgetriebes 26 verbunden ist. Die Verbindung kann beispielsweise ein Stirnradsatz sein, der die elektrische Maschine 34 mit der Eingangswelle des zweiten Teilgetriebes 26 verbindet, oder ein Stirnradsatz, der die elektrische Maschine 34 mit einem Radsatz des zweiten Teilgetriebes 26 verbindet.

Bei 38 ist eine Steuereinrichtung gezeigt, die dazu dient, die elektrische Maschine 34 anzusteuern und ggf. weitere Steuerfunktionen übernehmen kann.

Bei 40 ist schematisch ein elektrischer Energiespeicher gezeigt, beispielsweise eine Batterie, der ebenfalls von der Steuereinrichtung 38 gesteuert wird und der mit der elektrischen Maschine 34 elektrisch verbunden ist, um der elektrischen Maschine entweder elektrische Leistung für einen Motorbetrieb zur Verfügung zu stellen, oder um von der elektrischen Maschine elektrische Leistung in einem Generatorbetrieb zu erhalten.

In Fig. 1 ist ferner dargestellt, dass der Verbrennungsmotor mit einer Drehzahl n_{V} dreht und ein Drehmoment T_{V} bereitstellt. Entsprechend ist dargestellt, dass die elektrische Maschine 36 mit einer Drehzahl n_{EM} dreht und ein Drehmoment T_{EM} bereitstellt. An dem Abtrieb 28 wird eine Drehzahl n_{AB} gemessen und es wird ein Abtriebsmoment T_{AB} bereitgestellt.

Fig. 1 zeigt in schematischer Form eine Ladephase LP eines alternierenden Kriechladebetriebs.

In einem Kriechladebetrieb wird der elektrische Energiespeicher 40 während einer Kriechfahrt geladen, bei der die erste Reibkupplung 20 Antriebsleistung von dem Verbrennungsmotor 12 in einem Schlupfbetrieb in das erste Teilgetriebe 22 überträgt. In dem ersten Teilgetriebe 22 ist dabei vorzugsweise die gewöhnlich verwendete Anfahrgangstufe, insbesondere die Vorwärtsgangstufe 1 eingelegt, durch Schalten einer zugeordneten Schaltkupplung 23, sodass die Antriebsleistung auf den Abtrieb 28 übertragen wird.

Bei einer Kriechfahrt ist die Geschwindigkeit so gering, dass die erste Reibkupplung 20 im Schlupf betrieben werden muss, um zu vermeiden, dass der Verbrennungsmotor 12 mit seiner Drehzahl unter eine Mindestdrehzahl (z.B. Leerlaufdrehzahl) fällt.

Demzufolge wird während der Kriechfahrt in der ersten Reibkupplung 20 generell eine Reibleistung erzeugt, wie in Fig. 1 schematisch durch einen Pfeil an der ersten Reibkupplung 20 angedeutet ist.

In der in Fig. 1 dargestellten Ladephase ist die zweite Reibkupplung 24 vollständig geschlossen, und sämtliche Schaltkupplungen 27 des zweiten Teilgetriebes 26 sind geöffnet, sodass das zweite Teilgetriebe 26 in einer Neutralstellung ist. Demzufolge wird die von dem Verbrennungsmotor 12 bereitgestellte Leistung auf Antriebsleistung zum Vortrieb des Kraftfahrzeuges und auf Ladeleistung zum Laden des elektrischen Energiespeichers 40 aufgeteilt.

Der Kriechladebetrieb ist erfindungsgemäß als alternierender Betrieb eingerichtet, der wenigstens eine in Fig. 1 dargestellte Ladephase beinhaltet, bei der der Energiespeicher 40 geladen wird, und der wenigstens eine Zwischenphase beinhaltet, in der der Energiespeicher 40 nicht geladen wird.

Die Zwischenphase kann folglich dadurch eingerichtet werden, dass die zweite Reibkupplung 24 geöffnet wird. In diesem Fall ist es ggf. zum Aufrechterhalten einer konstanten

Kriechfahrt erforderlich, eine Antriebsleistung des Verbrennungsmotors 12 zu reduzieren. In der Ladephase kann dann hingegen mit einer höheren Ladeleistung geladen werden, sodass eine geforderte Ladeleistung im Mittel über die Ladephase und die Zwischenphase erreichbar ist.

In einer bevorzugten Ausführungsform findet in der Zwischenphase jedoch ein sogenannter Boost-Betrieb statt. Dies ist in Fig. 2 bei ZP gezeigt. In diesem Fall ist die zweite Reibkupplung 24 geöffnet und die erste Reibkupplung 20 wird nach wie vor im Schlupf betrieben, um die Kriechfahrt zu ermöglichen, und zwar unter Verwendung von Antriebsleistung durch den Verbrennungsmotor 12. Parallel hierzu stellt jedoch die elektrische Maschine 36 Antriebsleistung zum Vortrieb des Kraftfahrzeuges bereit, wozu eine der Schaltkupplungen 27 des zweiten Teilgetriebes 26 geschlossen wird, insbesondere eine der Vorwärtsgangstufe 2 zugeordnete Schaltkupplung. Demzufolge wird ein Boost-Betrieb eingerichtet, bei dem Antriebsleistung sowohl von der elektrischen Maschine 36 als auch von dem Verbrennungsmotor bereitgestellt wird.

Da folglich der Verbrennungsmotor 12 nur eine geringere Antriebsleistung bereitstellen muss, kann die in der ersten Reibkupplung 20 entstehende Reibleistung während der Zwischenphase ZP gemäß Fig. 2 reduziert werden.

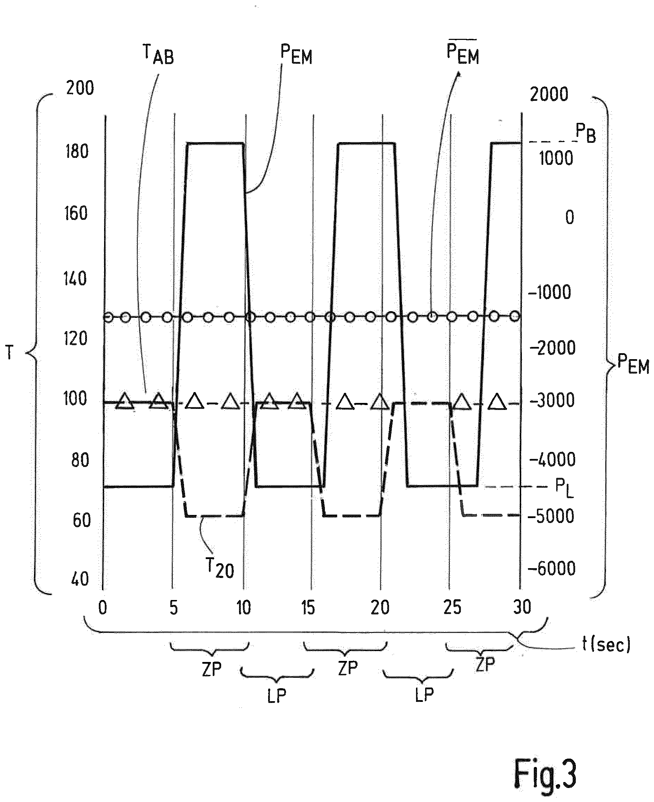

Fig. 3 zeigt ein Zeitablaufdiagramm, bei dem die Leistung P_{EM} der elektrischen Maschine in einer durchgezogenen Linie dargestellt ist, bei dem eine mittlere Ladeleistung *P̅_̅{̅E̅M̅}̅* über der Zeit dargestellt ist, und zwar durch eine aus Punkten bestehende Kurve, bei dem ein am Abtrieb 28 bereitgestelltes Drehmoment T_{AB} durch eine Linie aus Dreiecken dargestellt wird und bei dem ein von der ersten Reibkupplung 20 übertragenes Drehmoment T₂₀ durch eine gestrichelte Linie gezeigt ist.

Es ist zu erkennen, dass bei dem in dem Zeitablaufdiagramm der Fig. 3 dargestellten Kriechladebetrieb ein alternierender Betrieb realisiert wird, bei dem sich Zwischenphasen ZP und Ladephasen LP abwechseln. Die Zwischenphasen und die Ladephasen können jeweils eine Zeitdauer im Bereich von 1 Sekunde bis 20 Sekunden haben, vorzugsweise in einem Bereich von 3 Sekunden bis 10 Sekunden, insbesondere im Bereich von 3 Sekunden bis 7 Sekunden.

Ferner ist zu erkennen, dass in den Zwischenphasen ZP von der elektrischen Maschine jeweils eine positive Antriebsleistung P_{EM} in Form einer Boost-Leistung P_{B} in Höhe von etwa 1.500 Watt bereitgestellt wird. In den Ladephasen LP wird jeweils von der elektrischen Maschine 36 eine entsprechend hier negativ dargestellte Ladeleistung P_{L} in Höhe von -4.500 Watt aufgenommen. Hieraus ergibt sich eine mittlere Ladeleistung *P̅_̅{̅E̅M̅}̅* von -1.500 Watt.

Ferner ist erkennbar, dass in den Zwischenphasen ZP ein von der Reibkupplung 20 übertragenes Drehmoment T₂₀ deutlich reduziert ist, sodass die thermische Belastung der Reibkupplung 20 in den Zwischenphasen deutlich verringert ist.

Das an dem Abtrieb bereitgestellte Drehmoment T_{AB} bleibt bei dem Kriechladebetrieb vorzugsweise konstant, wie es durch die Linie aus Dreiecken dargestellt ist.

In den Zwischenphasen ZP wird das "fehlende" Drehmoment von der elektrischen Maschine 36 bereitgestellt.

Die angegebenen Leistungswerte sind lediglich Beispielwerte. Es ist auch möglich, mit einer Ladeleistung P_{L} von beispielsweise 6.000 Watt zu laden und mit einer Boost-Leistung P_{B} von 2.000 Watt zu arbeiten, sodass im Mittel eine Ladeleistung von 2.000 Watt (im Betrag) realisierbar ist. Andere Wertekombinationen und/oder zeitliche Verhältnisse der Dauer von Zwischenphase zu Ladephase sind natürlich in entsprechender Weise möglich.

Ferner ist selbstverständlich, dass das Diagramm der Fig. 3 für ein konstantes am Abtrieb bereitgestelltes Drehmoment T_{AB} dargestellt ist. Sofern auf Fahrerwunsch ein unterschiedliches Moment einzustellen ist, können die anderen Parameter in entsprechender Weise angepasst werden.

Gegenüber einem Kriechladebetrieb, bei dem dauerhaft Antriebsleistung über die erste Reibkupplung übertragen wird und dauerhaft die zweite Reibkupplung geschlossen ist und folglich dauerhaft eine Ladeleistung erzeugt wird, die einer mittleren Ladeleistung *P̅_̅{̅E̅M̅}̅* entspricht, kann die mittlere Reibleistung in der ersten Reibkupplung 20 bei dem erfindungsgemäßen alternierenden Betrieb um ca. 20 % reduziert werden.

## Patentansprüche

1. Verfahren zum Durchführen eines Kriechladebetriebes mittels eines Hybrid-Antriebsstranges (10) eines Kraftfahrzeuges, wobei der Hybrid-Antriebsstrang (10) einen Verbrennungsmotor (12) und ein Doppelkupplungsgetriebe (16) aufweist, das eine erste Reibkupplung (20), ein erstes Teilgetriebe (22), eine zweite Reibkupplung (24) und ein zweites Teilgetriebe (26) beinhaltet, wobei eine elektrische Maschine (34) mit einem Eingang des zweiten Teilgetriebes (26) verbunden ist, wobei die elektrische Maschine (34) mit einem elektrischen Energiespeicher (40) verbunden ist und dazu ausgebildet ist, in einem Generatorbetrieb den elektrischen Energiespeicher (40) zu laden, wobei der Kriechladebetrieb beinhaltet, den elektrischen Energiespeicher (40) während einer Kriechfahrt, bei der die erste Reibkupplung (20) im Schlupfbetrieb Antriebsleistung von dem Verbrennungsmotor (12) in das erste Teilgetriebe (22) überträgt, zu laden, wobei der Kriechladebetrieb als alternierender Betrieb eingerichtet ist, mit wenigstens einer Ladephase (LP), in der der Energiespeicher (40) geladen wird, und mit wenigstens einer Zwischenphase (ZP), in der der Energiespeicher nicht geladen wird, **dadurch gekennzeichnet, dass** die Zwischenphase dadurch eingerichtet wird, dass die zweite Reibkupplung (24) geöffnet wird, wobei in der Zwischenphase (ZP) die elektrische Maschine (34) als Motor betrieben wird und Antriebsleistung für die Kriechfahrt bereitstellt, sodass eine über die erste Reibkupplung (20) übertragene Antriebsleistung des Verbrennungsmotors (12) reduziert werden kann und
in der Ladephase (LP) die zweite Reibkupplung (24) geschlossen ist, so dass Antriebsleistung von dem Verbrennungsmotor (12) über die zweite Reibkupplung (24) der elektrischen Maschine (34) zugeführt wird, die als Generator betrieben wird und elektrische Energie zum Laden des Energiespeichers (40) bereitstellt.

2. Verfahren nach Anspruch 1, wobei das zweite Teilgetriebe (26) in der Ladephase (LP) von einem Abtrieb (28) des Antriebsstrangs (10) entkoppelt ist.

3. Verfahren nach einem der Ansprüche 1 oder 2, wobei das zweite Teilgetriebe (26) in der Zwischenphase (ZP) mit einem Abtrieb (28) des Antriebsstrangs (10) gekoppelt ist.

4. Verfahren nach einem der Ansprüche 1 bis 3, wobei das erste Teilgetriebe (22) ungeraden Vorwärtsgangstufen zugeordnet ist und während des Kriechladebetriebes in dem ersten Teilgetriebe (22) die Vorwärtsgangstufe 1 eingelegt ist.

5. Verfahren nach einem der Ansprüche 1 bis 4, wobei das zweite Teilgetriebe (26) den geraden Vorwärtsgangstufen zugeordnet ist und während der Zwischenphase (ZP) in dem zweiten Teilgetriebe (26) die Vorwärtsgangstufe 2 eingelegt ist.

6. Verfahren nach einem der Ansprüche 1 bis 5, wobei der Energiespeicher (40) in der Ladephase (LP) mit einer Ladeleistung (P_{L}) geladen wird, wobei der Energiespeicher (40) in der Zwischenphase (ZP) mit einer Boost-Leistung (P_{D}) entladen wird, und wobei der Betrag der Ladeleistung (P_{L}) größer ist als der Betrag der Boost-Leistung (P_{D}).

7. Hybrid-Antriebsstrang (10) mit einem Verbrennungsmotor (12) und einem Doppelkupplungsgetriebe (16), das eine erste Reibkupplung (20), ein erstes Teilgetriebe (22), eine zweite Reibkupplung (24) und ein zweites Teilgetriebe (26) beinhaltet, wobei eine elektrische Maschine (34) mit einem Eingang (36) des zweiten Teilgetriebes (26) verbunden ist, wobei die elektrische Maschine (34) mit einem elektrischen Energiespeicher (40) verbunden ist und dazu ausgebildet ist, in einem Generatorbetrieb den Energiespeicher (40) zu laden, und mit einer Steuereinrichtung (38), die dazu ausgebildet und eingerichtet ist, ein Verfahren nach einem der Ansprüche 1 bis 6 durchzuführen.

## Claims

1. Method for implementing a creep charging mode by means of a hybrid drive train (10) of a motor vehicle, the hybrid drive train (10) having an internal combustion engine (12) and a double clutch transmission (16) which comprises a first friction clutch (20), a first sub-transmission (22), a second friction clutch (24) and a second sub-transmission (26), an electric machine (34) being connected to an input of the second sub-transmission (26), the electric machine (34) being connected to an electric energy store (40) and being configured to charge the electric energy store (40) in a generator mode, the creep charging mode comprising charging the electric energy store (40) during creeping, in the case of which the first friction clutch (20) transmits drive power in the slipping mode from the internal combustion engine (12) into the first sub-transmission (22), the creep charging mode being set up as an alternating mode, with at least one charging phase (LP), in which the energy store (40) is charged, and with at least one intermediate phase (ZP), in which the energy store is not charged, **characterized in that** the intermediate phase is set up by virtue of the fact that the second friction clutch (24) is opened, the electric machine (34) being operated as a motor in the intermediate phase (ZP) and providing drive power for creeping, with the result that drive power of the internal combustion engine (12) can be reduced, which drive power is transmitted via the first friction clutch (20), and the second friction clutch (24) being closed in the charging phase (LP), with the result that drive power is fed from the internal combustion engine (12) via the second friction clutch (24) to the electric machine (34) which is operated as a generator and provides electric energy for charging the energy store (40).

2. Method according to Claim 1, the second sub-transmission (26) being decoupled from an output (28) of the drive train (10) in the charging phase (LP).

3. Method according to either of Claims 1 and 2, the second sub-transmission (26) being coupled to an output (28) of the drive train (10) in the intermediate phase (ZP).

4. Method according to one of Claims 1 to 3, the first sub-transmission (22) being assigned to odd forward gear stages, and the forward gear stage 1 being engaged in the first sub-transmission (22) during the creep charging mode.

5. Method according to one of Claims 1 to 4, the second sub-transmission (26) being assigned to the even forward gear stages, and the forward gear stage 2 being engaged in the second sub-transmission (26) during the intermediate phase (ZP).

6. Method according to one of Claims 1 to 5, the energy store (40) being charged with a charging power (P_{L}) in the charging phase (LP), the energy store (40) being discharged with a boost power (P_{D}) in the intermediate phase (ZP), and the magnitude of the charging power (P_{L}) being greater than the magnitude of the boost power (P_{D}).

7. Hybrid drive train (10) with an internal combustion engine (12) and a double clutch transmission (16) which comprises a first friction clutch (20), a first sub-transmission (22), a second friction clutch (24) and a second sub-transmission (26), an electric machine (34) being connected to an input (36) of the second sub-transmission (26), the electric machine (34) being connected to an electric energy store (40) and being configured to charge the energy store (40) in a generator mode, and with a control device (38) which is configured and set up to carry out a method according to one of Claims 1 to 6.

## Revendications

1. Procédé permettant d'effectuer un mode de charge extra-lente au moyen d'une chaîne cinématique hybride (10) d'un véhicule automobile, dans lequel la chaîne cinématique hybride (10) présente un moteur à combustion interne (12) et une boîte de vitesses à embrayage double (16) qui comporte un premier embrayage à friction (20), une première partie de boîte de vitesses (22), un deuxième embrayage à friction (24) et une deuxième partie de boîte de vitesses (26), dans lequel une machine électrique (34) est reliée à une entrée de la deuxième partie de boîte de vitesses (26), dans lequel la machine électrique (34) est reliée à un accumulateur d'énergie (40) et est réalisée pour charger l'accumulateur d'énergie (40) dans un mode générateur, dans lequel le mode de charge extra-lente consiste à charger l'accumulateur d'énergie électrique (40) pendant une avance extra-lente lors de laquelle le premier embrayage à friction (20) en mode de glissement transmet une puissance d'entraînement du moteur à combustion interne (12) à la première partie de boîte de vitesses (22), dans lequel le mode de charge extra-lente est conçu en tant que mode alterné avec au moins une phase de charge (LP) lors de laquelle l'accumulateur d'énergie (40) est chargé, et avec au moins une phase intermédiaire (ZP) lors de laquelle l'accumulateur d'énergie n'est pas chargé, **caractérisé en ce que** la phase intermédiaire est conçue **en ce que** le deuxième embrayage à friction (24) est ouvert, la machine électrique (34) fonctionnant comme un moteur dans la phase intermédiaire (ZP) et fournissant une puissance d'entraînement pour l'avance extra-lente de sorte qu'une puissance d'entraînement du moteur à combustion interne (12), transmise par le premier embrayage à friction (20), peut être réduite, et
le deuxième embrayage à friction (24) est fermé dans la phase de charge (LP) de sorte qu'une puissance d'entraînement est amenée du moteur à combustion interne (12) par l'intermédiaire du deuxième embrayage à friction (24) à la machine électrique (34) qui fonctionne comme générateur et fournit de l'énergie électrique pour charger l'accumulateur d'énergie (40).

2. Procédé selon la revendication 1, dans lequel la deuxième partie de boîte de vitesses (26) est découplée d'un entraînement (28) de la chaîne cinématique (10) dans la phase de charge (LP).

3. Procédé selon l'une quelconque des revendications 1 ou 2, dans lequel la deuxième partie de boîte de vitesses (26) est couplée à un entraînement (28) de la chaîne cinématique (10) dans la phase intermédiaire (ZP).

4. Procédé selon l'une quelconque des revendications 1 à 3, dans lequel la première partie de boîte de vitesses (22) est attribuée à des rapports de marche avant impairs, et le rapport de marche avant 1 est engagé dans la première partie de boîte de vitesses (22) pendant le mode de charge extra-lente.

5. Procédé selon l'une quelconque des revendications 1 à 4, dans lequel la deuxième partie de boîte de vitesses (26) est attribuée aux rapports de marche avant pairs, et le rapport de marche avant 2 est engagé dans la deuxième partie de boîte de vitesses (26) pendant la phase intermédiaire (ZP).

6. Procédé selon l'une quelconque des revendications 1 à 5, dans lequel l'accumulateur d'énergie (40) est chargé dans la phase de charge (LP) avec une puissance de charge (P_{L}), l'accumulateur d'énergie (40) étant déchargé dans la phase intermédiaire (ZP) avec une puissance de suralimentation (P_{D}), et la grandeur de la puissance de charge (P_{L}) étant supérieure à la grandeur de la puissance de suralimentation (P_{D}).

7. Chaîne cinématique hybride (10), comprenant un moteur à combustion interne (12) et une boîte de vitesses à embrayage double (16) qui comporte un premier embrayage à friction (20), une première partie de boîte de vitesses (22), un deuxième embrayage à friction (24) et une deuxième partie de boîte de vitesses (26), une machine électrique (34) étant reliée à une entrée (36) de la deuxième partie de boîte de vitesses (26), la machine électrique (34) étant reliée à un accumulateur d'énergie électrique (40) et réalisée pour charger l'accumulateur d'énergie (40) dans un mode de générateur, et comprenant un dispositif de commande (38) qui est réalisé et conçu pour effectuer un procédé selon l'une quelconque des revendications 1 à 6.
